Europäisches Patentamt

European Patent Office

Office européen des brevets

(19)

(11) Veröffentlichungsnummer : **0 213 359**
**B1**

(12) **EUROPÄISCHE PATENTSCHRIFT**

(45) Veröffentlichungstag der Patentschrift :
20.09.89

(51) Int. Cl.⁴ : **F 16 L 51/02**

(21) Anmeldenummer : **86109938.0**

(22) Anmeldetag : **19.07.86**

(54) Kompensator.

(30) Priorität : 30.08.85 DE 3530972

(43) Veröffentlichungstag der Anmeldung :
11.03.87 Patentblatt 87/11

(45) Bekanntmachung des Hinweises auf die Patenterteilung : 20.09.89 Patentblatt 89/38

(84) Benannte Vertragsstaaten :
CH DE FR GB IT LI

(56) Entgegenhaltungen :
DE—A— 2 638 622
DE—B— 1 158 776
DE—B— 1 253 532
FR—A— 662 561

(73) Patentinhaber : Agintec AG
Limmattalstrasse 395
CH-8049 Zürich (CH)

(72) Erfinder : Maier, Hans Paul
Limmattalstrasse 395
CH-8049 Zürich (CH)

(74) Vertreter : Gramm, Werner, Prof. Dipl.-Ing. et al
Patentanwälte Gramm + Lins Theodor-Heuss-
Strasse 2
D-3300 Braunschweig (DE)

## Beschreibung

Die Erfindung betrifft einen Kompensator als elastische Verbindung zwischen zwei im Abstand voneinander angeordneten, jeweils mit einem Flansch versehenen Rohrenden o. dergl., bestehend aus einem Balgkörper, der zwischen zwei zwischen den Flanschen liegenden Kontraflanschen angeordnet ist, die auf ihrer dem jeweils zugeordneten Flansch zugewandten Stirnseite von jeweils einer in eine Ringnut eintauchenden gummielastischen Ringwulst des Balgkörpers hintergriffen werden und mit dem zugeordneten Flansch verbunden sind, sowie aus Spannmitteln zum Einpressen der Ringwulst in die zugeordnete Ringnut.

Ein vergleichbarer Kompensator läßt sich der DE-A-26 38 622 entnehmen. Bei dieser vorbekannten Ausführungsform liegt in montiertem Zustand der Kontraflansch mit seiner dem Balgkörper abgewandten Anschlagfläche unmittelbar an der Stirnfläche des Rohrendes an, das ein Flansch sein kann.

Derartige Kompensatoren, deren Balgkörper aus Gummi bestehen und eine Gewebe-Armierung aufweisen können, sind geeignet zur Aufnahme von Wärmedehnungen, Montageungenauigkeiten, Vibrationen, Setzbewegungen und Isolation von Körperschall in Trink- und Brauchwasserleitungen, speziell bei Sanitär-Installationen, Kläranlagen, Klimaanlagen, der Lebensmittelindustrie usw.

Die vorbekannten Kompensatoren verlangen also mit den Rohrenden einteilig ausgebildete, verschweißte oder sonstwie fest verbundene Flansche und sind daher teuer in der Herstellung und bei der Montage.

Der Erfindung liegt die Aufgabe zugrunde, den eingangs beschriebenen Kompensator preiswerter zu gestalten und in seiner Montage zu vereinfachen.

Diese Aufgabe wird gemäß der Erfindung gelöst durch die im Anspruch 1 erfaßten Merkmale.

Der erfindungsgemäße Kompensator läßt sich somit auf glatten, lediglich entgrateten Rohrenden montieren, wobei als einzige Montagehilfe passende Schlüssel für die Verschraubungen benötigt werden. Der neue Kompensator läßt sich nicht nur leicht montieren, sondern ebenso leicht auch demontieren. Da bei der Montage die Einzelteile lediglich aufgesteckt und über Schraubverbindungen gegeneinander verspannt werden müssen, können alle in explosionsgeschützter Umgebung vorgeschriebenen Schutzmaßnahmen entfallen.

Jedes Klemmelement kann aus zumindest einer konvex ausgebildeten Ringscheibe bestehen ; es kann in seinem ringförmigen Teil ein bogenförmiges Profil aufweisen und mit Radialschlitzen versehen sein. Der radial innenliegende Klemmrand kann angeschärft sein, um so beim Verspannen des Kompensators zusätzlich zu der kraftschlüssigen Verbindung einen leichten Formschluß zwischen Klemmelement und Rohrmantelfläche zu bilden.

Die Ausbildung der Ringwulst führt in Verbindung mit der Innenkontur der Klemmkammer zu einer sehr einfachen, jedoch außerordentlich hochbelastbaren Abdichtung. Ein leichter Versatz der miteinander zu verbindenden Rohrenden bei der Montage ist unerheblich.

Insbesondere bei großen Durchmessern der miteinander zu verbindenden Rohrenden kann es vorteilhaft sein, wenn das Kammerteil und/oder der Flansch aus mehreren separaten Ringsegmenten besteht.

Das Kammerteil kann auch mit der ihm zugeordneten Ringwulst des Balgkörpers fest verbunden sein, beispielsweise durch Anvulkanisierung. Es ist aber auch möglich, daß das Kammerteil von einer im Balgkörper vorgesehenen Gewebe-Armierung umgriffen ist. Diese Armierung kann bei Herstellung des Balgkörpers zuerst in die Spritzform eingelegt werden, worauf dann die Kammerteile in die Form eingelegt werden. Nach Abschluß des Spritzvorganges erhält man eine quasi unlösliche Verbindung.

Weitere Einzelheiten und Vorteile der Erfindung sind Gegenstand der Unteransprüche und werden anhand von Ausführungsbeispielen näher erläutert.

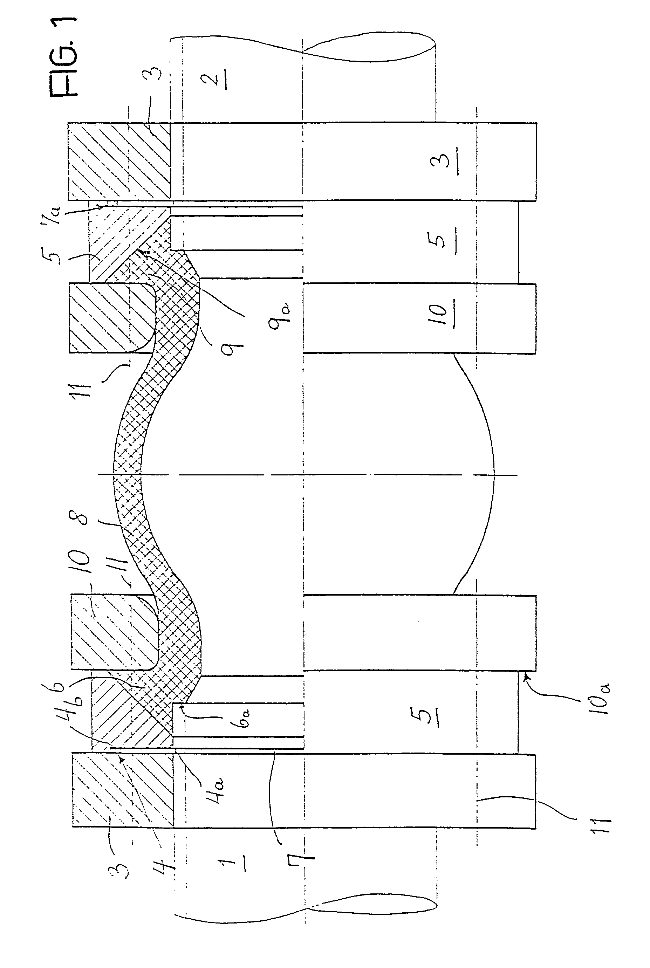

In den Zeichnungen sind einige als Beispiele dienende Ausführungsformen der Erfindung dargestellt. Dabei zeigen die Figuren 1 bis 5 verschiedene Ausführungsformen eines zum Teil im Längsschnitt dargestellten montierten Kompensators.

Figur 1 zeigt einen Kompensator als elastische Verbindung zwischen zwei im Abstand voneinander angeordneten Rohrenden 1, 2. Auf jedes der beiden Rohrenden 1, 2 ist zuerst ein Flansch 3, ein Klemmelement 4 sowie ein Kammerteil 5 aufgeschoben. Jedes Kammerteil 5 weist eine zum Flansch 3 hin offene kreisringförmige Klemmkammer 7 auf, in die das Klemmelement 4 eingeschoben ist, das ringscheibenförmig ausgebildet ist, sich mit einem radial innenliegenden Klemmrand 4a auf dem Rohrmantel abstützt und hinsichtlich seines radial außenliegenden Klemmrandes 4b von einer ringförmigen Klemmfläche 7a der Klemmkammer 7 übergriffen wird. In entlastetem Zustand ragt das Klemmelement 4 über die Stirnfläche des zugeordneten Kammerteils 5 hinaus. Die Ausbildung des Klemmelementes 4 ist dabei so gewählt, daß eine das Klemmelement in axialer Richtung gegen die Rückseite der zugeordneten Klemmkammer 7 drückende Kraft zu einer Vergrößerung des Außendurchmessers und gleichzeitig zu einer Verkleinerung des Innendurchmessers des Klemmelementes führt. Das Klemmelement 4 kann in seinem ringförmigen Teil ein bogenförmiges Profil aufweisen und mit Radialschlitzen versehen sein. Der dargestellte Flansch 3 ist als planer Flanschring ausgebildet.

Das Kammerteil 5 ist mit einer jeweils zum Zwischenraum zwischen den beiden Rohrenden 1, 2 hin offenen Dichtungskammer 9 versehen, die sich konisch in Richtung des genannten Zwischenraumes erweitert und auf ihrer radial innenliegenden Seite teilweise von der Mantelfläche des zugeordneten Rohrendes 1, 2 begrenzt ist.

Der Zwischenraum zwischen den beiden Rohrenden 1, 2 wird von einem Balgkörper 8 umschlossen, der aus Gummi besteht und eine Gewebe-Armierung aufweisen kann. Der Balgkörper 8 weist an seinen beiden axialen Enden jeweils eine Ringwulst 6 auf, die in die Dichtungskammer 9 eingreift und einen Kontraflansch 10 hintergreift, der die genannte Dichtungskammer 9 in axialer Richtung begrenzt. Flansch 3 und Kontraflansch 10 sind jeweils über eine Verschraubung 11 gegeneinander verspannbar, die im Ausführungsbeispiel aus Schraubbolzen bestehen kann, die nur durch den Flansch 3 und den Kontraflansch 10 gesteckt sind.

Der Querschnitt der unbelasteten Ringwulst 6 entspricht etwa einem Viertelkreissegment. Beim Anziehen der Verschraubung 11 wird die Ringwulst 6 von der Dichtungskammer 9 in radialer und axialer Richtung so beaufschlagt, daß die Ringwulst die Dichtungskammer ausfüllt und unter Druck an der konischen Ringfläche 9a der Dichtungskammer 9, der Stirnseite 10a des Kontraflansches 10 sowie an der Mantelfläche des zugeordneten Rohrendes 1, 2 anliegt. Außerdem liegt die Ringwulst 6 mit einer Ringschulter 6a gegen die Stirnseite des zugeordneten Rohrendes 1, 2 an. Durch das Anziehen der Verschraubung 11 werden außerdem die Klemmelemente 4 verformt, so daß diese hohe Klemmkräfte auf die Rohrenden 1, 2 aufbringen.

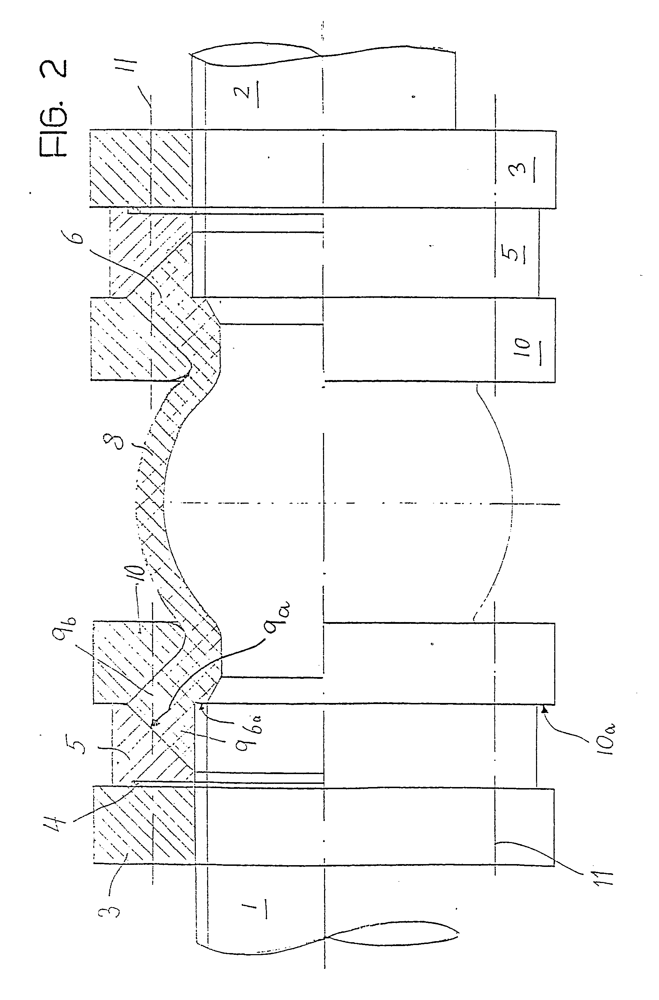

Die in Figur 2 dargestellte Ausführungsform unterscheidet sich von der der Figur 1 nur durch die Form der Ringwulst 6 sowie der sie aufnehmenden Dichtungskammer 9, 9b. Die Dichtungskammer wird hälftig durch die Dichtungskammer 9 im Kammerteil 5 und hälftig durch eine entsprechend ausgebildete, aber spiegelbildlich hierzu angeordnete Dichtungskammer 9b im Kontraflansch 10 gebildet. Die Dichtungskammer 9, 9b weist dadurch im Querschnitt angenähert die Form eines gleichschenkligen Dreiecks auf. Der Querschnitt der unbelasteten Ringwulst 6 entspricht bei diesem Ausführungsbeispiel etwa einem Halbkreissegment.

Der lichte Innendurchmesser der jeweils außerhalb des zugeordneten Rohrendes 1, 2 liegenden Kontraflansches 10 ist bei den Ausführungsformen gemäß den Figuren 1 und 2 größer als der Außendurchmesser der Rohrenden 1, 2. Die Kontraflansche 10 können aus Metall oder aus einem Kunststoff bestehen.

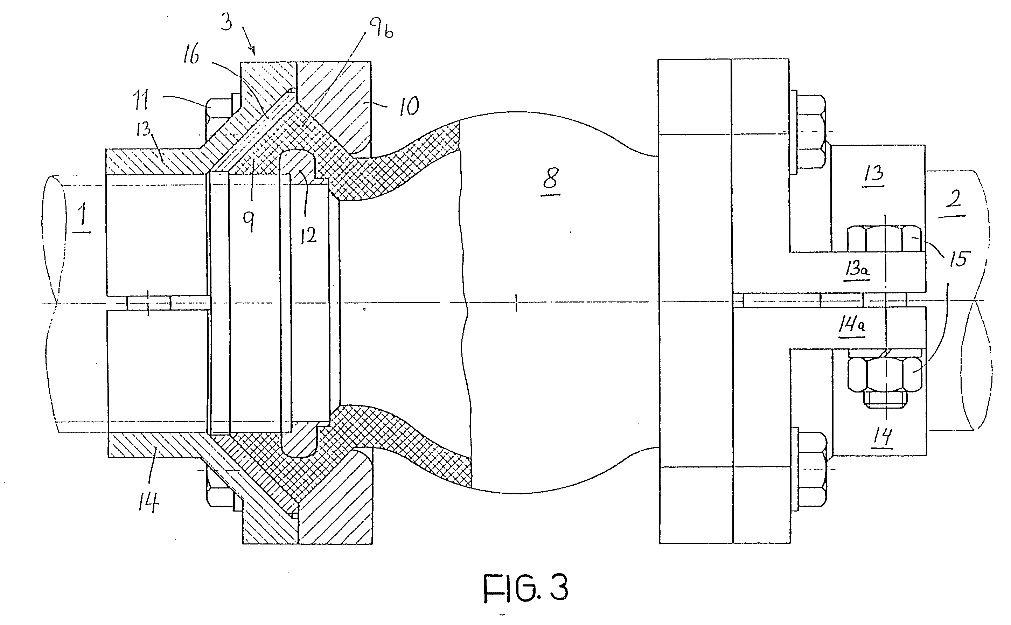

Bei der Ausführungsform gemäß Figur 3 entspricht die Ausbildung der Ringwulst 6 im wesentlichen der der Figur 2. Jedoch ist in der Ringwulst 6 ein abgestufter Stützring 12 vorgesehen, der gegen die Mantelfläche sowie die Stirnseite des zugeordneten Rohrendes 1, 2 anliegt und dadurch für das zugeordnete Rohrende zugleich als Anschlag dient. Der Stützring 12 ist lose in eine radial nach innen offene, seiner Außenkontur angepaßte Ringnut in der Ringwulst 6 eingedrückt.

Bei der Ausführungsform gemäß Figur 3 sind weder ein separates Kammerteil noch Klemmelemente vorgesehen. Vielmehr ist hier die Dichtungskammer 9 unmittelbar im Flansch 3 angeordnet, der axial geteilt ist und sich aus zwei Halbschalen 13, 14 zusammensetzt, die jeweils axial verlaufende Flanschränder 13a, 14a aufweisen, die über eine Verschraubung 15 radial gegeneinander verspannt sind, wobei die beiden Halbschalen 13, 14 zwischen sich das zugeordnete Rohrende 1, 2 einklemmen. Die Halbschalen 13, 14 liegen stirnseitig am zugeordneten Kontraflansch 10 an und sind mit diesem über Schraubbolzen 11 verschraubt. In die durch die beiden Halbschalen 13, 14 definierte Dichtungskammer 9 ist eine deren konischer Innenkontur angepaßte konische Ringscheibe 16 eingeschoben, die zum Schutz der gummielastischen Ringwulst 6 dient und ein Einklemmen dieser Ringwulst zwischen den Flanschrändern 13a, 14a der Halbschalen 13, 14 verhindern soll.

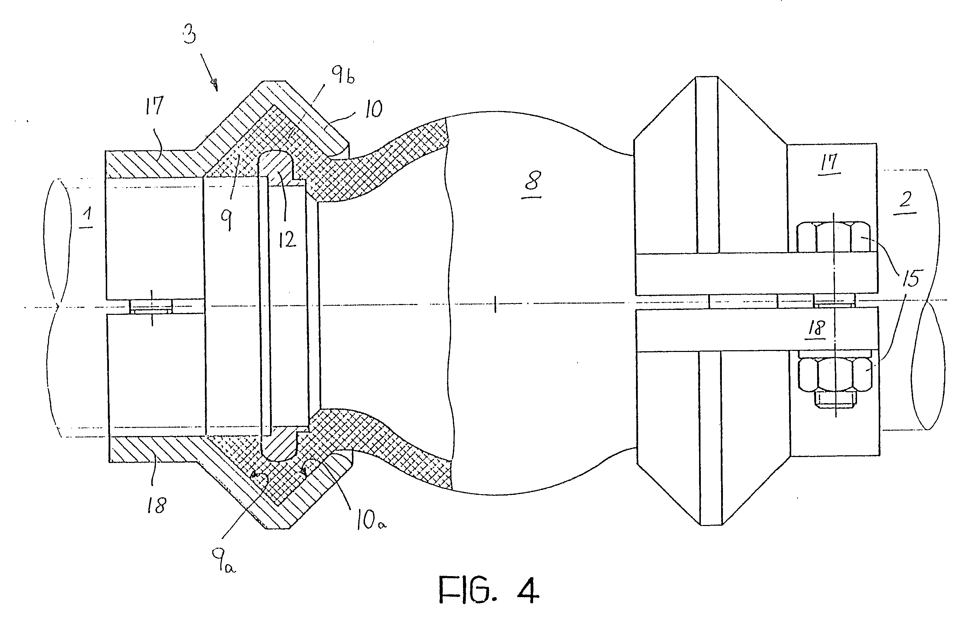

Bei der Ausführungsform gemäß Figur 4 werden Flansch und Kontraflansch gemeinsam durch zwei Halbschalen 17, 18 gebildet. Gegenüber der Ausführungsform gemäß Figur 3 entfällt somit die Verschraubung 11; auch auf den Einbau einer konischen Ringscheibe 16 wurde verzichtet.

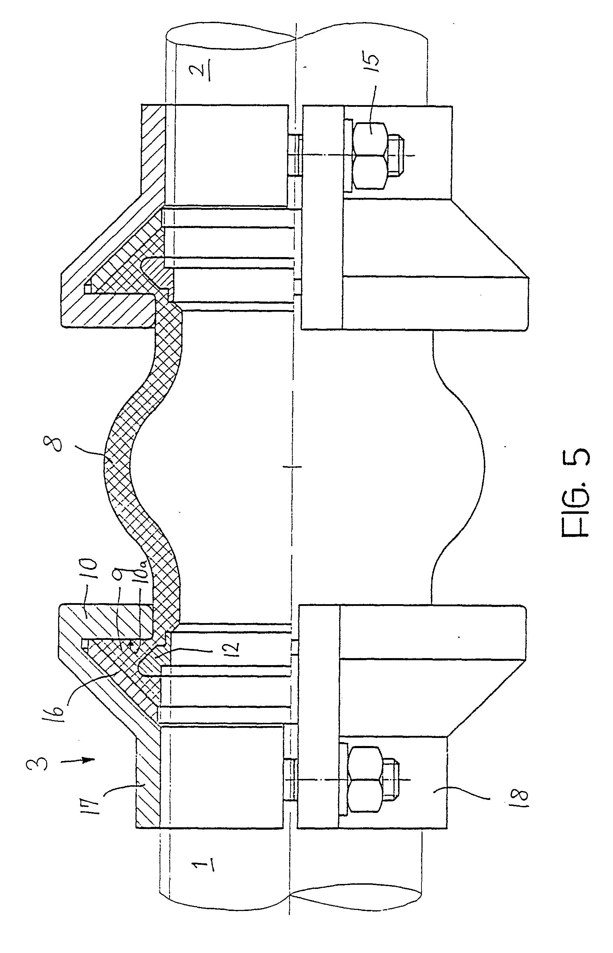

Figur 5 zeigt einen Kompensator, bei dem Dichtungskammer 9 und Ringwulst 6 etwa der Ausführungsform gemäß Figur 1 entsprechen. Im übrigen aber sind Flansch und Kontraflansch gemeinsam wiederum durch Halbschalen 17, 18 gemäß Figur 4 gebildet. In die Dichtungskammer 9 ist eine ungeteilte konische Ringscheibe 16 eingeschoben.

Gummikompensatoren, die vorzugsweise in niedrigen Unter- und Oberdruckbereichen eingesetzt werden, erfordern hinsichtlich ihrer Verbindung mit den Rohrenden keine hohen Klemmkräfte, so daß bei derartigen Einsatzbereichen auf die Klemmelemente 4 gemäß den Figuren 1 und 2 verzichtet werden kann. Bei allen Ausführungsformen erfolgt die Abdichtung gegenüber den Rohrenden 1, 2 in zwei rechtwinklig zueinander verlaufenden Ebenen, nämlich einmal in der durch die Stirnseite des Rohrendes 1, 2 gebildeten Ebene sowie im Bereich der Mantelfläche jedes Rohrendes.

Bei den Ausführungsformen gemäß den Figuren 1 und 2 könnte das Kammerteil 5 aus mehreren separaten Segmenten bestehen; es könnte auch mit der ihm zugeordneten Ringwulst 6 fest verbunden sein.

Bei den dargestellten Kompensatoren können extreme Umlenkungen etwaig vorgesehener Armierungsgewebe des Balgkörpers 8 vermieden werden. Dadurch kann auch auf zusätzliche Stützgeflechte verzichtet werden.

Die Schalenbauweise gemäß den Figuren 3, 4 und 5 führt zu einer Vereinfachung der Montage und Demontage. Bei allen Ausführungsformen lassen sich die Enden der Kompensatoren auf die Rohrenden 1, 2 aufschieben, bis diese an der Ringschulter 6a der Ringwulst 6 bzw. am Stützring 12 anliegen. Es ergibt sich eine dem Werkstoffgummi angepaßte « weiche » Verbindungstechnik, die zu einer Verlängerung der Lebensdauer der Kompensatoren führt.

**Patentansprüche**

1. Kompensator als elastische Verbindung zwischen zwei im Abstand voneinander angeordneten, jeweils mit einem Flansch (3) versehenen Rohrenden (1, 2) o. dergl., bestehend aus einem Balgkörper (8), der zwischen zwei zwischen den Flanschen (3) liegenden Kontraflanschen (10) angeordnet ist, die auf ihrer dem jeweils zugeordneten Flansch (3) zugewandten Stirnseite (10a) von jeweils einer in eine Ringnut eintauchenden gummielastischen Ringwulst (6) des Balgkörpers (8) hintergriffen werden und mit dem zugeordneten Flansch (3) verbunden sind, sowie aus Spannmitteln (11 ; 15) zum Einpressen der Ringwulst (6) in die zugeordnete Ringnut, dadurch gekennzeichnet, daß die Ringnut eine sich konisch in Richtung auf den zugeordneten Kontraflansch (10) öffnende, in einem Kammersegment zwischen Flansch (3) und Kontraflansch (10) liegende ringförmige Dichtungskammer (9) ist, die auf ihrer radial innenliegenden Seite teilweise von der Mantelfläche des zugeordneten Rohrendes (1, 2) o. dergl. begrenzt ist und bei montiertem Kompensator durch Anziehen der Spannmittel (11 ; 15) die Ringwulst (6) in radialer und axialer Richtung so beaufschlagt, daß diese die Dichtungskammer (9) ausfüllt und unter Druck an der konischen Ringfläche (9a) der Dichtungskammer (9), der Stirnseite (10a) des Kontraflansches (10) sowie der Mantelfläche des zugeordneten Rohrendes (1, 2) o. dergl. anliegt, wobei durch Anziehen der Spannmittel (11 ; 15) zugleich auch die Lage des zugeordneten Flansches (3) gegenüber dem ihm zugeordneten Rohrende (1, 2) o. dergl. fixiert ist.

2. Kompensator nach Anspruch 1, dadurch gekennzeichnet, daß die unbelastete Ringwulst (6) im Querschnitt etwa einem Viertelkreissegment entspricht.

3. Kompensator nach Anspruch 1 oder 2, dadurch gekennzeichnet, daß die Ringwulst (6) bei montiertem Kompensator mit einer Ringschulter (6a) gegen die Stirnseite des zugeordneten Rohrendes (1, 2) anliegt.

4. Kompensator nach Anspruch 1 oder 2, dadurch gekennzeichnet, daß in der Ringwulst (6) ein abgestufter Stützring (12) vorgesehen ist, der gegen die Stirnseite des zugeordneten Rohrendes (1, 2) anliegt.

5. Kompensator nach Anspruch 4, dadurch gekennzeichnet, daß der Stützring (12) lose in eine radial nach innen offene, seiner Außenkontur angepaßte Ringnut in der Ringwulst (6) eingedrückt ist.

6. Kompensator nach einem der vorhergehenden Ansprüche, dadurch gekennzeichnet, daß der Flansch (3) lose auf das zugeordnete Rohrende (1, 2) aufgeschoben und über eine Verschraubung (11) o. dergl. mit dem Kontraflansch (10) verspannbar ist und zusammen mit einem ebenfalls lose auf dieses Rohrende (1, 2) aufgeschobenen, sich am Flansch (3) abstützenden, die genannte Dichtungskammer (9) aufweisenden ringförmigen Kammerteil (5) eine Klemmkammer (7) bildet, in der zumindest ein ringscheibenförmiges Klemmelement (4) angeordnet ist, das sich mit einem radial innenliegenden Klemmrand (4a) auf dem Rohrmantel abstützt, hinsichtlich eines radial außenliegenden Klemmrandes (4b) von einer Klemmfläche (7a) der Klemmkammer (7) übergriffen wird und in axialer Richtung so aus der Klemmkammer (7) herausragt, daß eine das Klemmelement beaufschlagende axiale Druckkraft zu einer Vergrößerung des Außendurchmessers und zu einer Verkleinerung des Innendurchmessers des Klemmelementes führt.

7. Kompensator nach Anspruch 6, dadurch gekennzeichnet, daß das Klemmelement (4) in seinem ringförmigen Teil ein bogenförmiges Profil aufweist und mit Radialschlitzen versehen ist.

8. Kompensator nach Anspruch 1, 3, 4, 5, 6 oder 7, dadurch gekennzeichnet, daß der Kontraflansch (10) eine der ringförmigen Dichtungskammer (9) entsprechende, spiegelbildlich zu dieser angeordnete Ausnehmung (9b) aufweist, so daß die Dichtungskammer (9, 9b) insgesamt einen Querschnitt angenähert der Form eines gleichschenkligen Dreiecks aufweist, während der Querschnitt der unbelasteten Ringwulst (6) etwa einem Halbkreissegment entspricht.

9. Kompensator nach einem der vorhergehenden Ansprüche, dadurch gekennzeichnet, daß der Balgkörper (8) aus Gummi besteht und eine Gewebe-Armierung aufweist.

10. Kompensator nach einem der vorhergehenden Ansprüche, dadurch gekennzeichnet, daß die lose aufgeschobenen Flansche (3) als plane Flanschringe ausgebildet sind.

11. Kompensator nach einem der vorhergehenden Ansprüche, dadurch gekennzeichnet, daß das Kammerteil (5) und/oder der Flansch (3) aus mehreren separaten Segmenten besteht.

12. Kompensator nach einem der Ansprüche 6 bis 11, dadurch gekennzeichnet, daß das Kammerteil (5) mit der ihm zugeordneten Ringwulst (6) des Balgkörpers (8) fest verbunden ist.

13. Kompensator nach einem der Ansprüche 1 bis 5, 8 oder 9, dadurch gekennzeichnet, daß die Dichtungskammer (9) im Flansch (3) angeordnet ist.

14. Kompensator nach Anspruch 13, dadurch gekennzeichnet, daß der Flansch (3) axial geteilt ist und sich aus zwei Halbschalen (13, 14 ; 17, 18) zusammensetzt, die durch Schrauben (15) o. dergl. radial gegeneinander verspannt sind und zwischen sich das zugeordnete Rohrende (1, 2) einklemmen.

15. Kompensator nach Anspruch 14, dadurch gekennzeichnet, daß die Halbschalen (13, 14) stirnseitig am zugeordneten Kontraflansch (10) anliegen und mit diesem verschraubt (11) sind.

16. Kompensator nach Anspruch 15, dadurch gekennzeichnet, daß in die durch die beiden Halbschalen (13, 14 ; 17, 18) definierte Dichtungskammer (9, 9b) eine deren konischer Innenkontur angepaßte konische Ringscheibe (16) eingeschoben ist.

17. Kompensator nach Anspruch 14, dadurch gekennzeichnet, daß die beiden Halbschalen (17, 18) jeweils auch den Kontraflansch (10) bilden.

**Claims**

1. Compensator forming an elastic connection between two spaced pipe ends (1, 2) or the like, each provided with a flange (3), consisting of a bellows body (8), which is arranged between two counter-flanges (10) lying between the flanges (3), which counter-flanges, on their end faces (10a) facing the associated flanges (3), are engaged behind by an elastomeric annular bead (6) of the bellows body (8) extending into an annular groove and are connected to the associated flanges (3), as well as of tensioning means (11 ; 15) for pressing the annular bead (6) into the associated annular groove, characterized in that the annular groove is a conical annular sealing chamber (9) in a chamber segment lying between the flange (3) and counter-flange (10), opening in the direction of the associated counter-flange (10), which sealing chamber (9) is partially delimited on its radially inner side by the peripheral surface of the associated pipe end (1, 2) or the like and, with the compensator mounted, so acts on the annular bead (6) in the radial and axial directions through tightening of the tensioning means (11 ; 15) that this bead fills the sealing chamber (9) and bears under pressure on the conical annular surface (9a) of the sealing chamber (9), the end face (10a) of the counter-flange (10) as well as the peripheral surface of the associated pipe end (1, 2) or the like, whereby on tightening the tensioning means (11 ; 15) also the position of the associated flange (3) is at the same time fixed relative to the associated pipe end (1, 2) or the like.

2. Compensator according to claim 1, characterized in that the unloaded annular bead (6) corresponds in cross-section to approximately a quarter circle segment.

3. Compensator according to claim 1 or 2, characterized in that the annular bead (6) bears in the mounted compensator with an annular shoulder (6a) against the end face of the associated pipe end (1, 2).

4. Compensator according to claim 1 or 2, characterized in that a stepped backing ring (12) is provided in the annular bead (6), which bears against the end face of the associated pipe end (1, 2).

5. Compensator according to claim 4, characterized in that the backing ring (12) is pressed in loose into an annular groove in the annular bead (6) opening radially inwards and adapted to the outer contour of the ring.

6. Compensator according to one of the preceding claims, characterized in that the flange (3) is pushed loose on to the associated pipe end (1, 2) and can be tightened to the counter-flange (10) by screw means (11) or the like and forms a clamping chamber (7) together with an annular chamber part (5) likewise pushed loose on to this pipe end (1, 2), abutting the flange (3) and having the said sealing chamber (9), in which clamping chamber at least one disc washer-like clamping element (4) is arranged, which bears on the pipe periphery with a radially inwardly lying clamping edge (4a), is engaged over with respect to a radially outer clamping edge (4b) by a clamping surface (7a) of the clamping chamber (7) and so projects out of the clamping chamber (7) in the axial direction that an axial pressure acting on the clamping element leads to an enlargement of the outer diameter and to a reduction of the inner diameter of the clamping element.

7. Compensator according to claim 6, characterized in that the clamping element (4) has an arcuate profile in its ring-formed part and is provided with radial slots.

8. Compensator according to claim 1, 3, 4, 5, 6 or 7, characterized in that the counter-flange (10) has a recess (9b) corresponding to the annular sealing chamber (9), arranged as a mirror image thereto, so that the sealing chamber (9 ; 9b) as a whole has a cross-section approximating to the form of an isosceles triangle, while the cross-section of the unloaded annular bead (6) corresponds approximately to a semicircular segment.

9. Compensator according to one of the preceding claims, characterized in that the bellows body (8) consists of rubber and has a textile reinforcement.

10. Compensator according to one of the preceding claims, characterized in that the loosely fitted flanges (3) are formed as flat flange rings.

11. Compensator according to one of the preceding claims, characterized in that the chamber part (5) and/or the flange (3) consists of a plurality of separate segments.

12. Compensator according to one of claims 6 to 11 characterized in that the chamber part (5) is firmly connected to the associated annular bead (6) of the bellows body (8).

13. Compensator according to one of claims 1 to 5, 8 or 9, characterized in that the sealing chamber (9) is arranged in the flange (3).

14. Compensator according to claim 13, characterized in that the flange (3) is divided axially and is assembled from two half shells (13, 14 ; 17, 18), which are radially tightened together by screws (15) or the like and clamp the associated pipe ends (1, 2) therebetween.

15. Compensator according to claim 14, characterized in that the half shells (13, 14) bear with end faces on the associated counter-flanges (10) and are screwed (11) thereto.

16. Compensator according to claim 15, characterized in that a conical washer (16) is pushed into the sealing chamber (9, 9b) defined between the two half shells (13, 14 ; 17, 18), matching their conical inner contour.

17. Compensator according to claim 14, characterized in that the two half shells (17, 18) also form the counter-flange (10).

## Revendications

1. Compensateur servant de liaison élastique entre deux extrémités de tubes (1, 2) ou similaires, disposées à distance l'une de l'autre et munies chacune d'une bride (3), composé d'un soufflet (8), disposé entre deux contre-brides (10) placées entre les brides (3) et qui sont retenues, sur leur face (10a) tournée vers la bride (3) correspondante, chacune par un bourrelet annulaire (6) du soufflet (8), ce bourrelet en caoutchouc élastique étant enfoncé dans une gorge annulaire, et sont reliées avec la bride correspondante (3), et composé de moyens de mise en serrage (11 ; 15) pour comprimer le bourrelet annulaire (6) dans la gorge annulaire correspondante, caractérisé en ce que la gorge annulaire est une chambre d'étanchéité (9) de forme annulaire, située entre bride (3) et contre-bride (10) dans un secteur de chambre et s'ouvrant en forme de cône vers la contre-bride (10) correspondante, et qui, sur son côté situé radialement vers l'intérieur, est délimitée en partie par la surface externe de l'extrémité du tube (1, 2), ou similaire, correspondante et qui, lorsque le compensateur est monté, refoule le bourrelet annulaire (6) dans les directions radiale et axiale de telle façon que celui-ci emplit la chambre d'étanchéité (9) et que, en pression, il s'ajuste à la surface annulaire conique (9a) de la chambre d'étanchéité (9), à la face frontale (10a) de la contre-bride (10), ainsi qu'à la surface externe de l'extrémité de tube correspondante (1, 2), tandis que, également, par serrage des moyens de mise en serrage (11 ; 15), la position de la bride (3) correspondante est, en même temps, fixée par rapport à l'extrémité de tube (1, 2), ou similaire, correspondante.

2. Compensateur conforme à la revendication 1, caractérisé par le fait que, en coupe, le bourrelet annulaire (6) sans contrainte correspond à peu près à un secteur d'un quart de cercle.

3. Compensateur conforme à la revendication 1 ou à la revendication 2, caractérisé par le fait que, lorsque le compensateur est monté, le bourrelet annulaire (6) s'ajuste par un épaulement annulaire (6a), sur le côté frontal de l'extrémité de tube correspondante (1, 2).

4. Compensateur conforme à la revendication 1 ou à la revendication 2, caractérisé par le fait que, dans le bourrelet annulaire (6) est prévu un anneau d'appui (12) en escalier, qui s'ajuste sur le côté frontal de l'extrémité de tube correspondante (1, 2).

5. Compensateur conforme à la revendication 4, caractérisé par le fait que l'anneau d'appui (12) est enfoncé par pression, mais libre, dans une rainure du bourrelet annulaire (6) ouverte radialement vers l'intérieur et adaptée au contour extérieur de l'anneau d'appui.

6. Compensateur conforme aux revendications précédentes, caractérisé par le fait que la bride (3) est montée libre sur l'extrémité du tube (1, 2) correspondante et peut être serrée sur la contre-bride (10) par un assemblage par boulons (11) ou analogues, et que, ensemble, avec une partie de chambre (5) en forme de bague qui est montée libre elle aussi sur cette extrémité de tube (1, 2), s'appuie sur la bride (3) et fait apparaître la susdite chambre d'étanchéité (9), elle forme une chambre de serrage (7), dans laquelle est disposé au moins un joint de serrage (4) en forme de rondelle annulaire, lequel par son bord radial intérieur (4a) s'appuie sur la surface latérale du tube, par son bord radial extérieur (4b) est entouré par une paroi de serrage (7a) de la chambre de serrage (7), et, dans la direction de l'axe, fait saillie hors de la chambre de serrage (7), de façon qu'un effort de compression axial s'exerçant sur le joint de serrage conduit à un agrandissement du diamètre extérieur et à une diminution du diamètre intérieur du joint de serrage.

7. Compensateur conforme à la revendication 6, caractérisé par le fait que le joint de serrage (4) présente dans sa partie annulaire un profil arqué, et est muni de fentes radiales.

8. Compensateur conforme à l'une des revendications 1, 3, 4, 5, 6 ou 7, caractérisé par le fait que la contre-bride (10) présente un évidement (9b) correspondant à celui de la chambre d'étanchéité (9) annulaire, mais disposé symétriquement à ce dernier, de telle sorte que la chambre d'étanchéité (9, 9b) dans son ensemble présente une section ayant approximativement la forme d'un triangle isocèle, tandis que la section du bourrelet annulaire (6) sans contrainte, correspond à peu près à un secteur d'un demi-cercle.

9. Compensateur conforme à l'une des revendications précédentes, caractérisé par le fait que le soufflet (8) est constitué de caoutchouc et présente une armature textile.

10. Compensateur conforme à l'une des revendications précédentes, caractérisé par le fait que les brides (3) montées libres ont la forme de rondelles planes.

11. Compensateur conforme à l'une des revendications précédentes, caractérisé par le fait que la partie de chambre (5) et/ou la bride (3) se compose(nt) de plusieurs segments séparés.

12. Compensateur conforme à l'une des revendications 6 à 11, caractérisé par le fait que la partie de chambre (5) est liée de façon fixe avec le bourrelet annulaire (6) du soufflet (8) qui lui correspond.

13. Compensateur conforme à l'une des revendications 1 à 5, 8 ou 9, caractérisé par le fait que la chambre d'étanchéité (9) est ménagée dans la bride (3).

14. Compensateur conforme à la revendication 13, caractérisé par le fait que la bride (3) est découpée par un plan passant par l'axe et se compose de deux demi-coquilles (13, 14 ; 17, 18) qui sont serrées radialement l'une contre l'autre par des boulons (15) ou analogues, et qui enserrent entre elles l'extrémité de tube correspondante (1, 2).

15. Compensateur conforme à la revendication 14, caractérisé par le fait que les demi-coquilles (13, 14) s'ajustent par leur face à la contre-bride correspondante (10), et lui sont assemblées par boulons.

16. Compensateur conforme à la revendication 15, caractérisé par le fait que, dans la chambre d'étanchéité (9, 9b) définie par les deux demi-coquilles (13, 14 ; 17, 18), est insérée une rondelle (16) conique ajustée au profil intérieur conique de la chambre d'étanchéité.

17. Compensateur conforme à la revendication 16, caractérisé par le fait que les deux demi-coquilles (17, 18) constituent aussi la contre-bride (10).

FIG. 1

FIG. 2

EP 0 213 359 B1

EP 0 213 359 B1

FIG. 3

FIG. 4

EP 0 213 359 B1

FIG. 5